# EUROPÄISCHE PATENTSCHRIFT

(11) **EP 0 366 960 B1**
(45) Veröffentlichungstag und Bekanntmachung des Hinweises auf die Patenterteilung: **09.02.1994**
(21) Anmeldenummer: 89118379.0
(22) Anmeldetag: 04.10.1989
(51) Int. Cl.: F16K 37/00, H03K 17/95

(54) **Überwachtes Magnetventil**
Operation-monitored magnetic valve
Vanne magnétique à fonctionnement surveillé

(30) Priorität: 04.11.1988 DE 8813817 U
(43) Veröffentlichungstag der Anmeldung: 09.05.1990
(73) Patentinhaber: HYDAC TECHNOLOGY GMBH, D-66280 Sulzbach (DE)
(72) Erfinder: Gensberger, Karl, D-6670 St. Ingbert (DE); Morsch, Joachim, Dipl.-Ing. (FH), D-6694 Marpingen (DE)
(74) Vertreter: Patentanwälte Bartels und Partner

(56) Entgegenhaltungen:
- EP-A- 0 087 094
- DE-A- 3 132 212
- FR-A- 2 505 443
- GB-A- 2 099 110
- US-A- 2 528 898

## Beschreibung

Die Erfindung betrifft eine Anordnung, bestehend aus einem Magnetventil und einer Vorrichtung zur Wegüberwachung, wobei das Magnetventil mit einem Betätigungsmagneten versehen ist, dessen Magnetanker zum Bewegen eines mit ihm über eine Schleppverbindung verbundenen Ventilgliedes entgegen der Wirkung einer Ventilfeder dient und einen Steuerkörper aufweist, welcher zur Wegüberwachung des Ventilgliedes in die Vorrichtung eintauchbar ist.

Eine Anordnung dieser Art, mit dem sich der Verbindungsweg zwischen einer Druckquelle und einem an der Druckquelle anschließbaren Verbraucher, beispielsweise einer hydraulischen Presse sperren oder freigeben läßt, ist durch die DE-A-3 132 212 bekannt. Bei den Magnetventilen dieser Anordnungen stellt der Ventilsitz, gegen den das Ventilglied in der Schließstellung drückt, einen mechanischen Hartanschlag dar, wobei die absolute Dichtigkeit erst bei Erreichen dieser Hartlage gewährleistet ist. Sicherheitsvorschriften fordern hierbei eine eindeutige Überwachung der geschlossenen Ventilstellung. Die bekannte Anordnung weist als Vorrichtung zur Wegüberwachung des Ventilgliedes in Verfahrrichtung desselben gesehen mehrere hintereinander angeordnete Stellungsanzeiger auf, in die der Steuerkörper eintauchbar ist, wobei zwei Stellungsanzeiger die Offen- und Geschlossen-Stellung des Magnetventils anzeigen und ein weiterer Stellungsanzeiger gleicher Bauart oberhalb des die Offenstellung signalisierenden Stellungsanzeigers angeordnet ist, welcher bei einer oberhalb des normalen Öffnungshubes des Magnetankers liegenden Stellung anspricht, so daß nicht nur eine eindeutige Aussage über die Offenstellung des Ventiles abgegeben wird, sondern vielmehr auch Störungen betreffend die Schleppverbindung.

Die angesprochenen Stellungsanzeiger nehmen gegenüber dem Steuerkörper des Magnetankers eine genau vorgegebene Lage ein, wobei der für die Anzeige der Geschlossen-Stellung zuständige Stellungsanzeiger ein dahingehendes Signal nur dann abgibt, wenn das Ventilglied unmittelbar in Anlage mit dem Ventilsitz ist und eine absolute Dichtigkeit vorliegt. Bei Verunreinigungen des Ventilsitzes und/oder des Ventilgliedes sowie bei mechanischen Instabilitäten und Toleranzen, Verschleiß oder dergl. kann ein vollständiges Verfahren des Ventilgliedes in seine Schließstellung (Hartlage) und damit ein Schließen des Magnetventiles insgesamt be- oder verhindert sein. Obwohl das Ventil nahezu geschlossen ist, zeigt dann aufgrund der festen Zuordnung von Stellungsanzeiger und Steuerkörper die Vorrichtung der Wegüberwachung bei dem bekannten Magnetventil die Offen-Stellung an mit der Folge, daß der gesamte Hydraulikkreislauf, in den das Magnetventil geschaltet ist, aus Sicherheitsgründen abgestellt wird, beispielsweise in der Form, daß eine Preßanlage zum Stillstand kommt und erst dann wieder in Betrieb genommen werden kann, wenn die Verunreinigungen und/oder Unregelmäßigkeiten zwischen Ventilsitz und Ventilglied beseitigt sind. Es zeigt sich dann in der Praxis häufig, daß eine dahingehende Außerbetriebnahme unnötig war, denn die entstandene Undichtigkeit an der Stelle des Ventilsitzes nimmt meist nicht den Umfang ein als daß eine sicherheitsgefährdende Situation eintreten könnte, die insbesondere eine Verletzung der Sicherheitsvorschriften mit sich bringt.

Ausgehend von diesem Stand der Technik liegt der Erfindung die Aufgabe zugrunde, eine Anordnung zu schaffen, bei der die geschlossene Stellung des Ventilgliedes sich sicher überwachen läßt das dem Betreiber einer Hydraulikanlage aber auch einen Ermessensspielraum läßt, bei geringfügigen Undichtigkeiten am Ventilglied die Anlage weiter zu betreiben, ohne relevante Sicherheitsvorschriften zu verletzen.
Bei einer Anordnung der eingangs genannten Art ist diese Aufgabe erfindungsgemäß dadurch gelöst, daß die Vorrichtung zur Wegüberwachung eine mit einer Erregerwicklung versehene Spule aufweist, die Teil einer elektronischen Schaltung ist, deren Schaltkreis eine mit der Spule verbundene Rückführung mit einem eine Schalthysterese erzeugenden Schaltkreisteil aufweist. Dank diesem eine Schalthysterese erzeugenden Schaltkreisteil wird mit einer definierten Hysterese gegenüber einer Einschaltschwelle, bei der die geöffnete Stellung des Ventilgliedes angegeben wird, die geschlossene Ventilstellung signalisiert. Durch diese vorgebbare Hysterese wird ein äußerst kleiner Schaltabstand des Ventilgliedes zum Sitz des Ventiles erreicht und an einer definierten Schließstellung des Ventilgliedes das Signal "Ventil geschlossen" durch die Wegüberwachung gegeben, obwohl das Ventilglied noch durchaus nicht in seiner absolut geschlossenen Stellung, d.h. in unmittelbarer Anlage mit dem Ventilsitz zu sein braucht.

Hierdurch ist erreicht, daß bei den angesprochenen Verunreinigungen des Ventilsitzes und/oder des Ventilgliedes, bei mechanischen Instabilitäten und Toleranzen, Verschleiß oder dergl., die ein vollständiges Schließen des Ventilgliedes verhindern können, trotzdem dessen geschlossene Stellung gemeldet wird. Durch derartige Fehlerquellen entsteht zwar eine Leckage, d.h. der Verbindungsweg zwischen Druckquelle und Verbraucher wird nicht völlig unterbrochen. Das führt aber aufgrund des geringen Zuflusses an dem aus der Druckquelle stammenden Druckmedium auch nur zu geringen Änderungen beim Verbraucher. So würde beispielsweise im Fall, daß der Verbraucher eine Hydraulikpresse wäre, der Druckstempel dieser Presse sich nur äußerst langsam und damit in einer für den Bediener ungefährlichen Art und Weise bewegen; eine Situation, die bei dem bekannten Magnetventil zur Abschaltung mit anschließender Wartung des Magnetventiles und seiner Teile führen würde. Mit der erfindungsgemäßen Anordnung lassen sich also ebenso einschlägige Sicherheitsvorschriften wie mit den bekannten einhalten.

Bei einer bevorzugten Ausführungsform der erfindungsgemäßen Anordnung besteht die Schaltung für die Wegüberwachung aus einen für Näherungsschalter bekannten Schaltkreis, so daß man auf bereits vorhandene Schaltkomponenten zurückgreifen kann.

Bei einer besonders bevorzugten Ausführungsform weist die elektronische Wegüberwachung zwei zueinander antivalente Ausgänge auf. Die Antivalenz dieser Ausgänge erlaubt eine sichere Kabelbrucherkennung innerhalb der Wegüberwachung durch eine nachgeschaltete Logik einer Steuerelektronik, was zur Erhöhung der Sicherheit beiträgt.

Bei einer weiteren bevorzugten Ausführungsform hat die Schleppverbindung ein mit dem Ventilglied oder mit dem Magnetanker fest verbundenes Schleppglied das zwischen zwei Schultern eines der mit Magnetanker oder Ventilglied bezeichneten Körper mit einem Schleppspiel eingreift. Die Verbindung zwischen dem Ventilglied und dem Magnetanker ist somit nach Art einer kardanischen Verbindung ausgebildet. Eine solche Verbindung gleicht auch während der Fertigung von Teilen entstehende nachteilige Maßabweichungen aus, wodurch eine höhere Betriebssicherheit des Magnetventils erreicht wird.

Bei einer weiteren bevorzugten Ausführungsform bildet das Ventilglied eine Vorsteuerstufe des Magnetventiles und weist einen eine Hauptstufe des Ventiles bildenden Teil auf. Mittels der Vorsteuerstufe an der die Ventilfeder angreift, läßt sich unter Kraft- und Formschluß die Hauptstufe des Ventilgliedes zum Versperren des Verbindungsweges zwischen Druckquelle und Verbraucher in seine Schließstellung bringen, sobald der Betätigungsmagnet nicht mehr betätigt ist. Dies hat den Vorteil, daß trotz Verunreinigungen, Verschleißes oder dgl . , was zur Hemmung der Bewegung der Hauptstufe in die Schließstellung im Magnetventil führen kann, die Hauptstufe durch die Vorsteuerstufe in Richtung des Ventilsitzes bewegt und so an diesen gedrückt wird, daß die in der Schließstellung sich ergebende Leckage nicht zu einem unzulässig hohen Durchfluß führt.

Bei einer weiteren besonders bevorzugten Ausführungsform ist die Hauptstufe des Ventilgliedes ein Kolben dessen dem Ventilsitz zugewandtes Sitzteil konisch ausgebildet ist. Hierdurch ist zu Beginn des Öffnens des Ventiles der von Ventilsitz und Sitzteil der Hauptstufe gebildete Öffnungsquerschnitt stark reduziert, so daß mit dieser Anordnung eine Feinsteuerung der Durchflußmenge möglich ist. Ferner können durch die Fertigung entstehende Toleranzfehler ausgeglichen und damit in ihrer Auswirkung auf die Leckage begrenzt werden.

Die Erfindung wird nachfolgend anhand eines in den Zeichnungen dargestellten Ausführungsbeispieles im einzelnen erläutert.
Es zeigen
- Fig. 1: einen Längsschnitt durch das Magnetventil,
- Fig. 2: den Schaltplan der elektronischen Wegüberwachung für das Magnetventil nach Fig. 1,
- Fig. 3: ein Durchflußdiagramm des Magnetventils nach Fig. 1 mit zwei darunter angeordneten Schaltdiagrammen, die die Schaltzustände an den beiden zueinander antivalenten Ausgängen A, A der elektronischen Wegüberwachungseinrichtung wiedergeben.

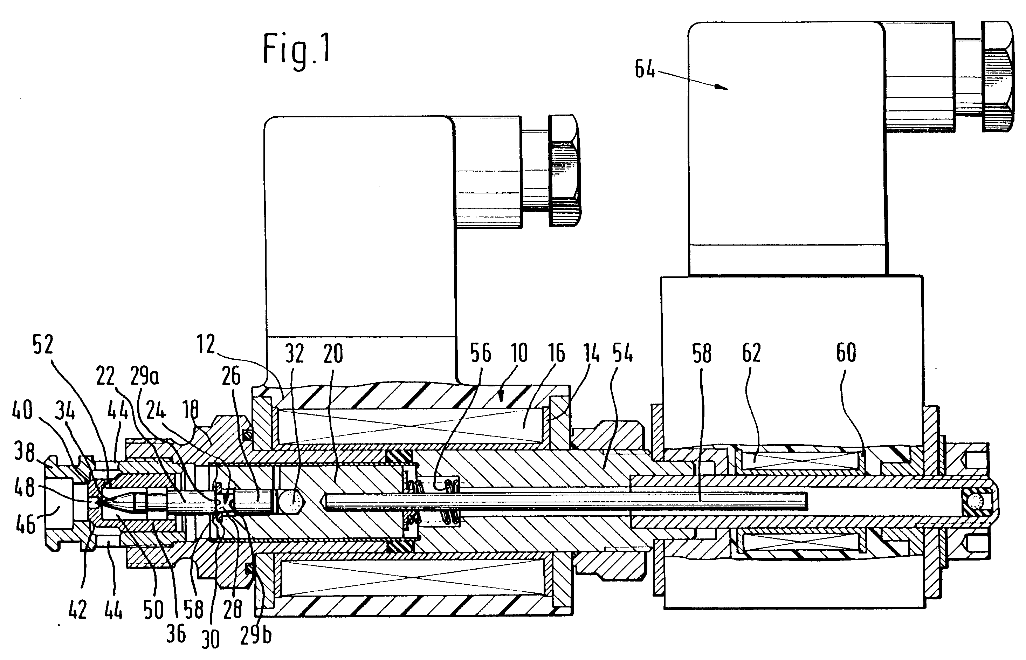

Das in Fig. 1 als Ganzes mit 10 bezeichnete Magnetventil ist hinsichtlich seiner mechanischen Baukomponenten im wesentlichen bereits in der DE-A-35 28 296 beschrieben worden, so daß im einzelnen der mechanische Aufbau des Magnetventils 10 nur in seinen im Hinblick auf die elektronische Wegüberwachung relevanten Bauteilen beschrieben werden wird. Das Magnetventil 10 weist einen Betätigungsmagneten 12 auf, der eine auf eine Spule 14 aufgewickelte Erregerwicklung 16 hat. In diese Spule 14 ragt von der in Fig. 1 linken Seite aus gesehen ein Magnetgehäuse 18 hinein, in dem ein Magnetanker 20 längsverschiebbar geführt ist.

In Fig. 1 gesehen, ist links vom Magnetanker 20 ein als Vorsteuerstufe dienendes Ventilglied 22 über eine als Ganzes mit 24 bezeichnete Schleppverbindung mit dem Magnetanker 20 verbunden. Zum Herstellen der Schleppverbindung 24 weist der Ventilschaft 26 des Ventilgliedes 22 eine Ringnut 28 mit zwei Schultern 29 a, b auf, in die eine seitlich im Magnetanker 20 einsetzbare Schleppscheibe 30 mit einem axialen Schleppspiel und mit einem radialen Spiel eingreift. Der Ventilschaft 26 stützt sich in axialer Richtung gegen den Magnetanker 20 über eine Stützkugel 32 ab.

Das dem Magnetanker 20 gegenüberliegende Ende des Ventilgliedes 22 weist eine kegelförmige Spitze 34 auf, die mit einem als Hauptstufe des Ventilgliedes 22 ausgebildeten Kolben 36 zusammenwirkt. Der Kolben 36 ist als Hohlkörper ausgebildet und innerhalb einer Hülse 38, die in das Magnetgehäuse 18 eingeschraubt ist in axialer Richtung in dieser längsverschiebbar geführt. Für das Zusammenwirken des Kolbens 36 mit einem ringförmig verlaufenden Ventilsitz 40 der Hülse 38 weist dieser an seiner dem Ventilsitz 40 zugewandten Seite ein konisch ausgebildetes Sitzteil 42 auf. Die Hülse 38 weist zwei mit einer Druckquelle, beispielsweise einer Hydraulikquelle (nicht dargestellt) verbindbare Zuflußbohrungen 44 und eine mit einem Verbraucher, beispielsweise einer Presse verbindbaren Abflußbohrung 46 auf. Der zwischen den Zuflußbohrungen 44 und der Abflußbohrung 46 vorhandene Verbindungsweg wird von dem Kolben 36 in seiner Schließ- oder Öffnungsstellung im wesentlichen versperrt bzw. freigegeben. In dem Kolben 36 ist eine erste durchgehende Öffnung 48 für die Verbindung zwischen dem Hohlraum 50 des Kolbens 36 und der Abflußbohrung 46 vorhanden. Ferner weist der Kolben 36 eine zweite durchgehende Öffnung 52 auf, die den Hohlraum 50 des Kolbens 36 mit den Zuflußbohrungen 44 verbindet. In der Schließstellung des Kolbens 36, die in Fig. 1 dargestellt ist, greift das Ventilglied 22 mit seiner kegelförmigen Spitze 34 in die erste Öffnung 48 des Kolbens 36 derart ein, daß die Spitze 34 des Ventilgliedes 22 in Anlage ist mit einem Teil der Bohrungswand der ersten durchgehenden Öffnung 48.

Am anderen, dem Ventilglied 22 gegenüberliegenden Ende des Magnetankers 20 greift eine sich am Polkern 54 des Magnetventils 10 abstützende als Druckfeder ausgebildete Ventilfeder 56 an. In dieser Ventilfeder 56 ist ein stangenförmiger, zylindrischer Steuerkörper 58 mit radialem Spiel geführt, der mit seinem einen Ende mit dem Magnetanker 20 fest verbunden ist und der mit seinem anderen Ende in die Spule 60 mit einer Erregerwicklung 62 eintaucht. Ferner ist der stangenförmige Steuerkörper 58 in dem Polkern 54 und in der Spule 60 mit radialem Spiel axial verschiebbar angeordnet.

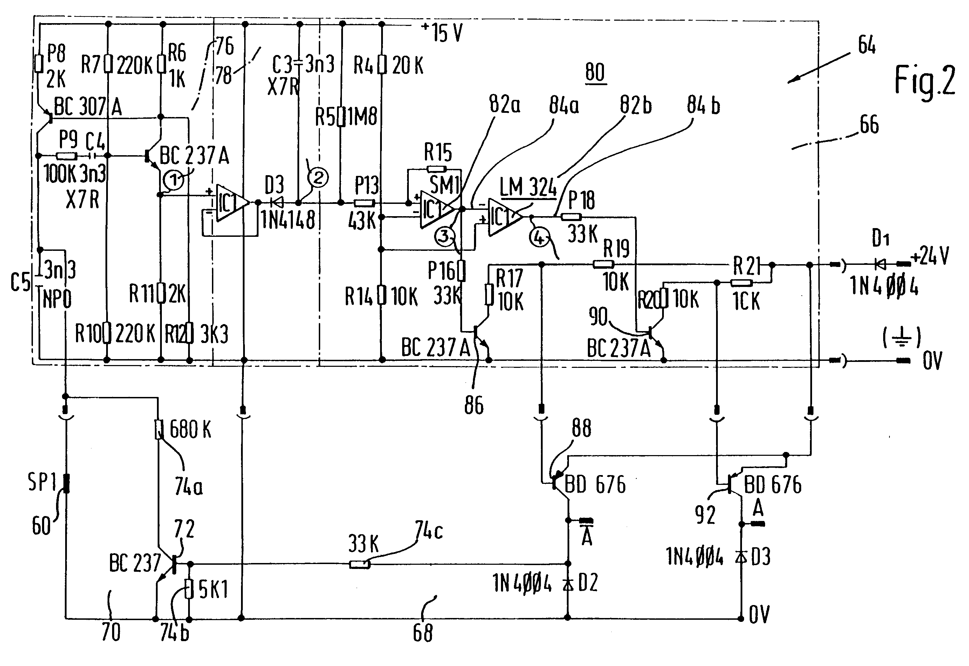

Die Spule 60 ist mit ihrer Erregerwicklung 62, die aus einem Draht von 0, 1 mm Durchmesser und 2600 Windungen gebildet ist, Teil einer als Ganzes mit 64 bezeichneten elektronischen Schaltung, wie sie in Fig. 2 dargestellt ist. Diese Schaltung 64 für die Wegüberwachung des Ventilgliedes 22 besteht aus einem für Näherungsschalter bekannten Schaltkreis 66, in dessen mit der Spule 60 verbundenen Rückführung 68 ein eine Schalthysterese erzeugender Schaltkreisteil 70 vorhanden ist. Der die Schalthysterese erzeugende Schaltkreisteil 70 ist im wesentlichen aus einem Transistor 72 als Schalter und drei Widerständen 74a, 74b und 74c zur Erzielung einer definierten Schaltschwelle des Transistors 72 und zur Güteveränderung gebildet. Der einem Näherungsschalter entsprechende Schaltkreis 66 ist im wesentlichen aus drei in Reihe hintereinander geschalteten elektronischen Baukomponenten (in Fig. 2 strichpunktiert als Blöcke dargestellt) gebildet, nämlich einem zusammen mit der Spule 60 einen Oszillator bildenden Schaltkreisteil 76, an den sich ein als Demodulator und ein als Komparator wirkender Schaltkreisteil 78 bzw. 80 anschließen. Der Komparatorschaltkreis 80 besteht im wesentlichen aus zwei in Reihe hintereinander geschalteten Komparatoren 82a und 82b, wobei der Ausgang 84a des ersten Komparators 82a auf den negativ bewerteten Eingang des zweiten Komparators 82b geschaltet ist. Der Ausgang 84a des ersten Komparators 82a ist ferner mit dem Basisanschluß eines ersten Transistors 86 verbunden, der wiederum in Verbindung steht mit dem Basisanschluß eines dritten Transistors 88. Ebenso ist der Ausgang 84b des zweiten Komparators 82b mit dem Basisanschluß eines zweiten Transistors 90 und über diesen an den Basisanschluß eines vierten Transistors 92 angeschlossen. Die in Fig. 2 mit A̅ und A bezeichneten Ausgänge des dritten bzw. vierten Transistors 88 bzw. 92 sind antivalent zueinander. Zum Herstellen der Rückführung 68 der elektronischen Schaltung 64 ist der Basisanschluß des als Schalter dienenden Transistors 72 des eine Schalthysterese erzeugenden Schaltkreisteiles 70 mit dem Ausgang A̅ des dritten Transistors 88 verbunden.

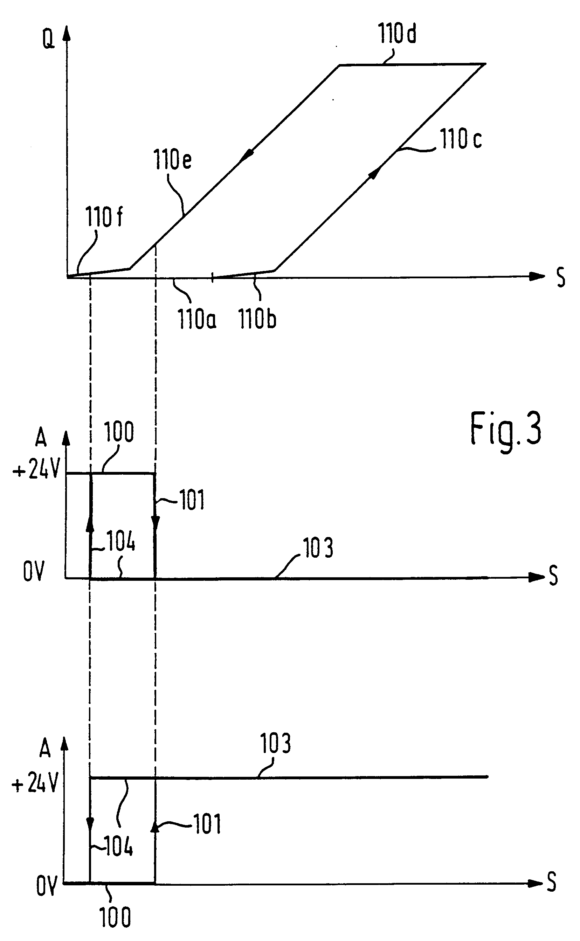

Im folgenden wird nun die Funktionsweise des Magnetventils 10 und der als Wegüberwachung für dieses Ventil dienenden elektronischen Schaltung 64 erläutert. Das Magnetventil 10 ist in Fig. 1 in seiner Schließstellung dargestellt, in welcher unter der Kraft der Ventilfeder 56 und des auf die freien Querschnitte des Kolbens 36 wirkenden Druckes des Druckmediums der konisch ausgebildete Sitzteil 42 des Kolbens 36 gegen den Ventilsitz 40 der Hülse 38 gedrückt wird. Der Verbindungsweg zwischen den Zuflußbohrungen 44 und der Abflußbohrung 46 ist unterbrochen. Um eine Verbindung zwischen den Zuflußbohrungen 44 und der Abflußbohrung 46 herzustellen, wird der Betätigungsmagnet 12 erregt, wodurch der Magnetanker 20 entgegen der Kraft der Ventilfeder 56 in Fig. 1 gesehen nach rechts verschoben wird. Hierbei nimmt die zwischen dem Magnetanker 20 und dem Ventilglied 22 vorhandene Schleppverbindung 24 das Ventilglied 23 mit, nachdem der Magnetanker 20 einen bestimmten Verschiebeweg zurückgelegt hat. Der Magnetanker 20 bewegt sich dabei so lange in Fig. 1 gesehen nach rechts ohne das Ventilglied 22 mitzuführen, bis die Schleppscheibe 30 der Schleppverbindung 24 in Anlage mit der in Fig. 1 gesehen rechten Schulter 29b der Ringnut 28 kommt. Während dieses Verfahrens des Magnetankers 20 verbleibt aufgrund der herrschenden Druckverhältnisse in den Zuflußbohrungen 44, in der Abflußbohrung 46 und im Hohlraum 50 des Kolbens 36 sowohl das Ventilglied 22 als auch der Kolben 36 in der in Fig. 1 gezeigten Stellung, während der mit dem Magnetanker 20 verbundene Steuerkörper 58 sich in Fig. 1 gesehen um die gleiche Wegstrecke wie der Magnetanker 20 nach rechts bewegt und tiefer in die Spule 60 mit ihrer Erregerwicklung 62 eintaucht. An dem mit 1 bezeichneten Ausgang des als Oszillator wirkenden Schaltkreisteiles 76 entsteht eine sinusförmige Schwingung von großer Amplitude, die auf den Eingang des als Demodulator wirkenden Schaltkreisteiles 78 gegeben wird. Der Demodulatorschaltkreis 78 besitzt an seinem mit 2 bezeichneten Ausgang eine Spannung nahe Null Volt, da durch ihn eine Demodulation der negativen Schwingungsamplitude erfolgt ist. Der dem als Demodulator wirkenden Schaltkreisteil 78 nachgeschaltete Komparatorschaltkreisteil 80 besitzt eine Schaltschwelle von ca. 5 Volt, so daß durch die ungefähr herrschenden 0 Volt am positiv bewerteten Eingang des ersten Komparators 82a sich am mit 3 bezeichneten Punkt des Ausganges 84a des ersten Komparators 82a ein Low-Level-Zustand ergibt. Dieser Low-Level am Punkt 3 des Ausganges 84a sorgt dafür, daß der erste Transistor 86 und damit auch der dritte Transistor 88 gesperrt ist, so daß der mit A̅ bezeichnete Ausgang des dritten Transistors 88 einen ungefähren Pegel von 0 Volt annimmt. Der dem ersten Komparator 82a nachgeschaltete Komparator 82b hat die Funktion eines Inverters und invertiert den am Punkt 3 herrschenden Pegel des Ausganges 84a der auf den negativen Eingang des zweiten Komparators 82b geschaltet ist, so daß an dem mit 4 bezeichneten. Ausgang 84b des zweiten Komparators 82b der Zustand High-Level herrscht. Dies führt dazu, daß über den zweiten Transistor 90 der vierte Transistor 92 durchgeschaltet wird und der mit A bezeichnete Ausgang des vierten Transistors 92 einen + 24 Volt Pegel (High-Level) annimmt. Bei den in Fig. 3 dargestellten beiden unteren Diagrammen ist der jeweilige Schaltzustand von A̅ und A an den Ausgängen des dritten bzw. vierten Transistors 88, 92 über dem zurückgelegten Hub des stangenförmigen Steuerkörpers 58 und damit des Magnetankers 20 aufgetragen, wobei der eben beschriebene Schaltzustand in den beiden unteren Diagrammen der Fig. 3 mit 100 bezeichnet ist.

Bewegt sich der stangenförmige Steuerkörper 58 noch weiter nach rechts und taucht mithin also noch tiefer in die Spule 60 mit ihrer Erregerwicklung 62 ein, wobei die Schleppscheibe 30 noch nicht in Anlage mit der rechten Schulter 29b der Ringnut 28 gekommen ist, so hat sich die Induktivität der Spule 60 derart verändert, daß eine Schwingbedingung für den Oszillatorschaltkreis 76 nicht mehr gegeben ist und die Schwingung schlagartig abreißt. Es ergibt sich hierbei ein sehr scharfer Übergang zwischen Maximalamplitude (+ 24V) und Null (0V) bei einer Änderung des zurückgelegten Hubes des Steuerkörpers 58 von nur ca. 4-6 hundertstel Millimeter. Diese als Schaltpunkt bezeichnete Schaltschwelle ist in den beiden unteren Diagrammen der Fig. 3 mit 101 bezeichnet. Extrapoliert man, wie das in Fig. 3 strichliniert dargestellt ist, den Verlauf der Schaltschwelle 101 senkrecht nach oben, so erkennt man an dem oberen Diagramm in dem die Durchflußmenge Q über dem Hub des Magnetankers 20 bzw. des Steuerkörpers 58 aufgetragen ist, daß die elektronische Wegüberwachung bereits die Meldung "Ventil offen" (0V) am Ausgang A angibt, bevor dem gemäß die Öffnung des Ventiles durch Bewegen des Ventilgliedes 22 und des Kolbens 36 in ihre Öffnungsstellung begonnen hat.

Die durch den Oszillatorschaltkreis 76 generierte Schwingung hat also wie eben beschrieben ausgesetzt, da eine entsprechende Bedämpfung durch den als Kern für die Spule 60 wirkenden Steuerkörper 58 erfolgt ist und die vorgegebene Schwingbedingung des Oszillators nicht mehr erfüllt wird. Es stellt sich somit eine Gleichspannung an dem in Fig. 2 mit 1 bezeichneten Punkt am Ausgang des Oszillatorschaltkreises 76 von ungefähr 7 Volt ein. Diese am Eingang des Demodulatorschaltkreises 78 herrschende Gleichspannung bewirkt indessen an der in Fig. 2 mit 2 bezeichneten Stelle ebenfalls eine Gleichspannung von ungefähr 7,6 Volt. Hierdurch ist die Komparatorschwelle von + 5 Volt überschritten und der mit 3 gekennzeichnete Punkt am Ausgang 84a des ersten Komparators 82a nimmt High-Level an, so daß der dritte Transistor 88 über den ersten Transistor 86 durchgeschaltet wird und der Ausgang A̅ des dritten Transistors 88 einen + 24 Volt Pegel annimmt. Das als Inverter dienende zweite Summierglied 82b kehrt wie bereits beschrieben die Spannung am Punkt 3 um und der mit 4 bezeichnete Punkt des Ausganges 84b des zweiten Komparators 82b nimmt Low- Level an, so daß der zweite und vierte Transistor 90 bzw. 92 sperrt und der mit A bezeichnete Ausgang des vierten Transistors einen 0 Volt Pegel annimmt. Dieser Schaltzustand ist bei den beiden in Fig. 3 unten dargestellten Diagrammen mit 103 bezeichnet. Solange das Schleppspiel in der Schleppverbindung 24 nicht überwunden ist, bleibt das Ventil geschlosen, was aus dem mit 110a bezeichneten Kurvenabschnitt des Durchflußdiagramms in Fig. 3 hervorgeht.

Sobald aber die Schleppscheibe 30 an der rechten Schulter 29b der Ringnut 28 angreift, wird bei der weiteren Bewegung des Magnetankers 20 nach rechts das Ventilglied 22 ebenfalls mit nach rechts bewegt, wobei seine kegelförmige Spitze 34 außer Eingriff mit der ersten durchgehenden Öffnung 48 kommt, so daß über die Zuflußbohrungen 44 und der zweiten durchgehenden Öffnung 52 der Verbindungsweg für den Durchfluß eines Druckmediums von der Druckquelle zum Verbraucher über die erste Öffnung 48 freigegeben ist. Hierdurch ändern sich die an den freien Querschnitten des Kolbens 36 angreifenden Druckkräfte des Druckmediums derart, daß der Kolben sich ebenfalls nach rechts bewegt und den unmittelbaren Verbindungsweg zwischen den Zuflußbohrungen 44 und der Abflußbohrung 46 freigibt. Durch den konisch ausgebildeten Sitzteil 42 des Kolbens 36 ist der freigegebene Öffnungsquerschnitt des Verbindungsweges zu Beginn des Verfahrens des Kolbens 36 in seiner Öffnungsstellung klein und damit die Durchflußmenge entsprechend gering. Ein diesem Durchflußverhalten des Ventils entsprechender Kurvenabschnitt ist im Durchflußdiagramm in Fig. 3 mit 110b bezeichnet. Das die Vorsteuerstufe bildende Ventilglied 22 erlaubt somit die Feinsteuerung der Durchflußmenge des von den Zuflußbohrungen 44 an die Ablauföffnung 46 strömenden Druckmediums durch den als Hauptstufe dienenden Kolben 36. Bei der weiteren Bewegung des Ventilgliedes 22 nach rechts bewegt sich auch der Kolben 36 weiter nach rechts und gibt einen wesentlich größeren Durchgangsquerschnitt für die Durchflußmenge zwischen den Zuflußbohrungen 44 und der Abflußbohrung 46 frei, so daß die von der Druckquelle zum Verbraucher transportierte Durchflußmenge an Druckmedium ansteigt, was in Fig. 3 im oben dargestellten Durchflußdiagramm als Kurvenabschnitt 110c bezeichnet ist, bis zu einem Maximalwert, bei dem der als Hauptstufe dienende Kolben 36 sich so weit nach rechts bewegt hat, daß er den Verbindungsweg zwischen den Zuflußbohrungen 44 und der Abflußbohrung 46 vollständig frei gibt.

Soll das Magnetventil 10 von seiner voll geöffneten Stellung aus wieder geschlossen werden, so wird der Betätigungsmagnet 12 von seiner Stromquelle, beispielsweise mittels eines Schalters (nicht dargestellt) getrennt, so daß der Magnetanker 20 mittels der als Druckfeder ausgebildeten Ventilfeder 56 in Fig. 1 gesehen nach links bewegt wird. Dabei nimmt der Magnetanker 20 die mit ihm verbundene Schleppscheibe 30 in Fig. 1 gesehen nach links mit, bis sie mit der in Fig. 1 links dargestellten Schulter 29a der Ringnut 28 in Anlage kommt. Die Überwindung dieses Spieles durch die Schleppverbindung 24 bei der das Ventil 10 voll geöffnet bleibt, hat keinen Einfluß auf die Durchflußmenge, was in Fig. 3 im Durchflußdiagramm aus der Geraden mit der Bezeichnung 100d ersichtlich ist. Sobald die Schleppscheibe 30 in Anlage mit der in Fig. 1 gesehen linken Schulter 29a der Ringnut 28 kommt wird aufgrund der Kraft der Druckfeder 56 über das als Vorsteuerstufe dienende Ventilglied 22 der die Hauptstufe bildende Kolben 36 kraftschlüssig nach links in seine Schließstellung zurück bewegt. Dabei nimmt die Durchflußmenge ab, was im Durchflußdiagramm in Fig. 3 mit der schräg nach unten verlaufenden Geraden 110e gekennzeichnet ist. Aufgrund der zu diesem Zeitpunkt am Ventilglied 22 und am Kolben 36 angreifenden Druckkräfte würde der Kolben 36 auch dann mit Sicherheit schließen, wenn die Ventilfeder 56 gebrochen wäre.

Bei jeder Bewegung des Magnetankers 20 nach links wird auch der Steuerkörper 58 entsprechend nach links bewegt und seine Eintauchtiefe in die Spule 60 mit der Erregerwicklung 62 nimmt ab. An und für sich müßte der Oszillatorschaltkreis 76 des einem Näherungsschalter entsprechenden Schaltkreises 66 erneut eine sinusförmige Schwingung von großer Amplitude abgeben und damit, wie bereits beschrieben, am Ausgang A des vierten Transistors 92 das Signal "Ventil geschlossen" (+ 24V) geben, sobald der Steuerkörper 58 in der Spule 60 bei der Bewegung nach links die Eintauchtiefe erreicht hat, die der Schaltschwelle 101 beim Öffnen entspricht. Extrapoliert man aber die vertikal geradlinig verlaufende Schaltschwelle 101 der beiden Schaltdiagramme von Fig. 3 nach oben in das Durchflußdiagramm der Fig. 3 hinein, wie das strichliniert dargestellt ist, erkennt man, daß dann die elektronische Wegüberwachung die Anzeige "Ventil geschlossen" abgeben würde, obwohl das Ventil noch in der unsicheren geöffneten Stellung wäre. Um hier Abhilfe zu schaffen, ist der mit A̅ bezeichnete Ausgang des dritten Transistors 88 über den Widerstand 74c mit dem Basisanschluß des Transistors 72 zum Erzeugen einer Schalthysterese verbunden. Indem der Transistor 72 des Hystereseschaltkreisteiles 70 durch den Pegel 24 Volt an A̅ angesteuert wird, der an A̅ dann herrscht, so lange das Ventil in seiner geöffneten Schaltstellung ist, was in dem untersten Diagramm der Fig. 3 mit 103 bezeichnet ist, wird dem Oszillatorschaltkreis 76 ein Widerstand parallel geschaltet, wodurch eine Bedämpfung erreicht wird. Diese Bedämpfung bewirkt eine Verschiebung des Schaltpunktes 101 in Richtung "Ventil geschlossen", wodurch der Steuerkörper 58 sich noch entsprechend weiter aus der Spule 60 zurückziehen muß, bevor die Schwingung des Oszillatorschaltkreises 76 erneut einsetzen kann. Derart wird eine definierte Hysterese gegenüber der Schaltschwelle 101 erzielt, die in den beiden unteren Diagrammen der Fig. 3 mit 104 bezeichnet ist. Extrapoliert man den vertikalen Abschnitt der mit 104 bezeichneten Schalthysterese nach oben in das Durchflußdiagramm der Fig. 3 hinein, was strichliniert dargestellt ist, erkennt man, daß noch ein Restabstand bis zum vollständigen Schließen des Ventiles bleibt, d.h. der Kolben 36 hat den Verbindungsweg zwischen Druckquelle und Verbraucher noch nicht vollständig abgesperrt, so daß noch eine geringe Durchflußmenge (Leckage) des Druckmediums zwischen dem Ventilsitz 40 und dem Sitzteil 42 hindurchströmen kann (im oberen Diagramm in Fig.3 mit 110f bezeichnet). Um die mit diesem Restabstand verbundene mögliche Leckage gering zu halten, wurde das Sitzventil mit der Feinsteuerphase versehen, die gewährleistet, daß z.B. bei Verunreinigungen des Ventilsitzes 40 der von der Überwachung nicht mehr erkannte Restabstand nicht zu einem unzulässig hohen Durchfluß führt. Dabei wird der Kolben 36 mit seinem konischen Sitzteil 42 gegen den Ventilsitz 40 der Hülse 38 mittels des Ventilgliedes 22 kraftschlüssig in die Schließstellung gedrückt und dort gehalten.

Mit der hier gezeigten elektronischen Wegüberwachung wird eine eindeutige Überwachung der geschlossenen Ventilstellung erreicht, wobei der Ausgang A + 24V meldet, wenn das Ventil sich in geschlossener, d.h. sicherer Position befindet und der 0V anzeigt, wenn das Ventil geöffnet ist. Der unsichere geöffnete und stromlose Zustand würde sich auch bei einem Spannungsabfall, beispielsweise durch Kabelbruch einstellen, so daß hier ein Ruhestromprinzip verwirklicht wurde.

Mittels den zueinander antivalenten Ausgängen A und A̅ des vierten bzw. dritten Transistors 92, 88 ist es für eine der elektronischen Wegüberwachung 64 nachgeschaltete bekannte und daher nicht weiter dargestellte Logikschaltung möglich, eine sichere Kabelbrucherkennung innerhalb der elektronischen Schaltung 64 durchzuführen. Wenn beispielsweise durch einen Kabelbruch in der elektronischen Wegüberwachung 64 beide Ausgänge der Schaltung A und A̅ jeweils den Pegel + 24 Volt annehmen würden, was einen kritischen Schaltzustand darstellt, könnte die Logikschaltung dann die gesamte Anlage abschalten, damit Unfälle vermieden werden.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Anordnung, bestehend aus einem Magnetventil (10) und einer Vorrichtung zur Wegüberwachung, wobei das Magnetventil (10) mit einem Betätigungsmagneten (12) versehen ist, dessen Magnetanker (20) zum Bewegen eines mit ihm über eine Schleppverbindung (24) verbundenen Ventilgliedes (22) entgegen der Wirkung einer Ventilfeder (56) dient und einen Steuerkörper (58) aufweist, welcher zur Wegüberwachung des Ventilgliedes (22) in die Vorrichtung eintauchbar ist, dadurch gekennzeichnet, daß die Vorrichtung eine mit einer Erregerwicklung (62) versehene Spule (60) aufweist, die Teil einer elektronischen Schaltung (64) ist, deren Schaltkreis (66) eine mit der Spule (60) verbundene Rückführung mit einem eine Schalthysterese erzeugenden Schaltkreisteil (70) aufweist.

2. Anordnung nach Anspruch 1 , dadurch gekennzeichnet, daß die Schaltung (64) für die Wegüberwachung aus einem für Näherungsschalter bekannten Schaltkreis (66) besteht.

3. Anordnung nach Anspruch 2, dadurch **gekennzeichnet,** daß der die Schalthysterese erzeugende Schaltkreisteil (70) im wesentlichen aus einem Transistor (72) als Schalter und drei Widerständen (74a, b, c) zur Erzielung einer definierten Schaltschwelle des Transistors (72) und zur Güteveränderung gebildet ist.

4. Anordnung nach Anspruch 2 oder 3, dadurch **gekennzeichnet**, daß der einem Näherungsschalter entsprechende Schaltkreis (66) im wesentlichen aus drei in Reihe hintereinander geschalteten elektronischen Baukomponenten gebildet ist, nämlich einem zusammen mit der Spule (60) einen Oszillator bildenden Schaltkreisteil (76) an den sich die als Demodulator und als Komparator wirkenden Schaltkreisteile (78, 80) anschließen.

5. Anordnung nach Anspruch 4, dadurch **gekennzeichnet,** daß der Komparatorschaltkreis (80) im wesentlichen aus zwei in Reihe hintereinander geschalteten Komparatoren (82a, b) gebildet ist, wobei der Ausgang des ersten hinter dem Demodulationsschaltkreis (78) angeordneten Komparators (82a) auf den negativ bewerteten Eingang des zweiten Komparators (82b) geschaltet ist.

6. Anordnung nach Anspruch 5, dadurch **gekennzeichnet,** daß die Ausgänge (84a, 84b) des ersten und des zweiten Komparators (82a, b) jeweils mit dem Basisanschluß eines ersten bzw. zweiten Transistors (86, 90) verbunden sind, die jeweils den Basisanschluß eines dritten bzw. vierten Transistors (88, 92) ansteuern.

7. Anordnung nach Anspruch 6, dadurch **gekennzeichnet,** daß die Ausgänge (A̅, A) des dritten und vierten Transistors (88, 92) antivalent zueinander sind.

8. Anordnung nach Anspruch 6 oder 7, dadurch **gekennzeichnet,** daß der Basisanschluß des als Schalter dienenden Transistors (72) des eine Schalthysterese erzeugenden Schaltkreisteiles (70) mit dem Ausgang (A̅) des dritten Transistors (88) verbunden ist.

9. Anordnung nach einem der Ansprüche 1 bis 8, dadurch **gekennzeichnet,** daß der Steuerkörper (58) als stangenförmiger, vorzugsweise zylindrischer Körper ausgebildet ist, der mit dem Magnetanker (20) verbunden ist.

10. Anordnung nach einem der Ansprüche 1 bis 9, dadurch **gekennzeichnet,** daß die Schleppverbindung (24) ein mit dem Ventilglied (22) oder mit dem Magnetanker (20) fest verbundenes Schleppglied hat, das zwischen zwei Schultern eines der mit Magnetanker (20) oder Ventilglied (22) bezeichneten Körper mit einem Schleppspiel eingreift.

11. Anordnung nach Anspruch 10, dadurch **gekennzeichnet,** daß das Schleppglied eine in eine Ringnut (28) im Ventilglied (22) eingreifende Schleppscheibe (30) ist, die mit dem Magnetanker (20) fest verbunden ist und daß die Ringnut (28) für die Anlage mit der Schleppscheibe (30) zwei Schultern (29a, b) aufweist.

12. Anordnung nach einem der Ansprüche 1 bis 11, dadurch **gekennzeichnet,** daß das Ventilglied (22) eine Vorsteuerstufe des Ventiles (10) bildet, welches auch einen eine Hauptstufe bildenden Teil aufweist.

13. Anordnung nach Anspruch 12, dadurch **gekennzeichnet,** daß der die Hauptstufe des Ventiles (10) bildende Teil ein aus einer Schließstellung in eine Öffnungsstellung und zurück bewegbarer Kolben (36) ist,
der in seinem Innern einen Hohlraum (50) aufweist,
der in dem Ventilkörper des Magnetventiles (10) geführt ist,
der in seiner Schließ- oder Öffnungsstellung den Weg zwischen einer Druckquelle und einem an diese Druckquelle angeschlossenen Verbraucher im wesentlichen versperrt bzw. freigibt,
der eine erste durchgehende Öffnung (48) für die Verbindung zwischen dem Hohlraum (50) und dem zum Verbraucher führenden Weg hat, wobei diese erste Öffnung mittels des Ventilgliedes (22) verschließ- oder freigebbar ist und
der eine zweite durchgehende Öffnung (52) hat, die den Hohlraum (50) mit dem zur Druckquelle führenden Weg verbindet.

14. Anordnung nach Anspruch 13, dadurch **gekennzeichnet,** daß der Kolben (36) an seiner dem Ventilsitz (40) zugewandten Seite ein konisch ausgebildetes Sitzteil (42) aufweist.

15. Anordnung nach Anspruch 13 oder 14, dadurch **gekennzeichnet,** daß das der ersten Öffnung (48) zugewandte Ende des Ventilgliedes (22) im wesentlichen kegelförmig ausgebildet ist.

## Claims

1. An arrangement, consisting of a solenoid valve (10) and a device for motion control, with the solenoid valve (10) including an actuating solenoid (12), the armature (20) of which serves to move a valve member (22) connected to the same by a drive link (24) against the effect of a valve spring (56) and including a control body (58) immersible into the device to control the motion of the valve element (22), characterized in that the device includes a coil (60) having an excitation winding (62) being part of an electronic circuit (64), the circuit (66) of which includes a feedback with a circuit section (70) generating a control hysteresis (70).

2. An arrangement according to Claim 1, characterized in that the circuit (64) for motion control consists of a circuit (66) known from proximity switches.

3. An arrangement according to Claim 2, characterized in that that the circuit section (70) generating the control hysteresis, mainly consists of a transistor (72) as a switch and three resistors (74a, b, c) to achieve a defined control threshold of the transistor (72) and for changes in state.

4. An arrangement according to Claims 2 or 3, characterized in that the circuit (66) corresponding to a proximity switch, mainly consists of three electronic components arranged in series, i.e. an oscillator forming a circuit section (76) together with the coil (60) followed by the circuit sections (78, 80) acting as a demodulator and a comparator.

5. An arrangement according to Claim 4, characterized in that the comparator circuit (80) mainly consists of two comparators (82a, b) arranged in series, with the output of the first comparator (82a) arranged downstream from the modulator circuit (78) connected to the negative input of the second comparator (82b).

6. An arrangement according to Claim 5, characterized in that the outputs (84a, 84b) of the first and second comparator (82a, b) are each connected to the base terminal of the first and/or second transistor (86, 90), each driving the base terminal of a third and/or fourth transistor (88, 92).

7. An arrangement according to Claim 6, characterized in that the outputs (A, A̅) of the third and fourth transistor (88, 92) are non-equivalent.

8. An arrangement according to Claims 6 or 7, characterized in that the base terminal of the transistor (72) serving as a switch of the circuit section (70) generating a control hysteresis is connected to output (A̅) of the third transistor (88).

9. An arrangement according to one of Claims 1 to 8, characterized in that the control body (58) is designed as a rod-shaped, preferably cylindrical body connected to the armature (20).

10. An arrangement according to one of Claims 1 to 9, characterized in that the drive link (24) includes a drive member rigidly connected to the valve member (22) or the armature (20), engaging between the two shoulders of a body, i.e. the armature (20) or the valve member (22) and including drive play.

11. An arrangement according to Claim 10, characterized in that the drive member consists of a drive disc (30) engaging into the annular groove (28) in the valve member (22), rigidly connected to the armature (20) and that the annular groove (28) includes two shoulders (29a, b) for engagement with the drive disc (30).

12. An arrangement according to one of Claims 1 to 11, characterized in that the valve member (22) forms a pilot stage of the valve (10) also including a section forming a main stage.

13. An arrangement according to Claim 12, characterized in that the section forming the main stage of the valve (10) is a piston (36) which can be moved from a closed position into an open position and vice versa, having a cavity (50) in its interior, guided in the valve body of the solenoid valve (10), mainly sealing and/or clearing in its closed or open position the connection between a pressure source and a user connected to that pressure source, including a first continuous orifice (48) for connection between the cavity (50) and the passage leading to the user, with this first orifice being sealed or cleared by the valve member (22) and including a second continuous orifice (52) connecting the cavity (50) to the passage leading to the pressure source.

14. An arrangement according to Claim 13, characterized in that the piston (36) has a conical seat section (42) on its side facing the valve seat (40).

15. An arrangement according to Claims 13 or 14, characterized in that the end of the valve member (22) facing the first orifice (48) is mainly conical in shape.

## Revendications

1. Agencement qui se compose d'une valve électromagnétique (10) et d'un dispositif de surveillance de trajet, dans lequel ladite valve électro-magnétique (10) est pourvue d'un électro-aimant d'actionnement (12) dont l'induit (20) a pour fonction d'imprimer, à un organe de valve (22) auquel il est relié par un couplage de traction (24), un mouvement à l'encontre de l'action d'un ressort de valve (56) et qui présente un organe de commande (58) qui, aux fins de surveillance du trajet de l'organe de valve (22), peut s engager à l'intérieur du dispositif, caractérisé en ce que ledit dispositif comporte une bobine (60) pourvue d'un enroulement d'excitation (62), qui fait partie d'un montage électronique (64) dont le circuit de commande (66) présente une connexion de retour reliée à la bobine (60) comportant une partie de circuit (70) engendrant une certaine hystérésis de commutation.

2. Agencement selon la revendication 1, caractérisé en ce que le montage (64) se compose, aux fins de surveillance de trajet ou de voie un circuit (66) connu pour les contacts ou les commutateurs de proximité.

3. Agencement selon la revendication 2, caractérisé en ce que la partie de circuit (70) produisant l'hystérésis de commutation se compose essentiellement d'un transistor (72) faisant fonction de commutateur, et de trois résistances (74a, b, c) destinées à établir un seuil d'action défini pour le transistor (72) et pour modifier le facteur de qualité.

4. Agencement selon la revendication 2 ou 3, caractérisé en ce que le circuit (66) correspondant à un commutateur de proximité se compose essentiellement de trois composants électroniques montés en série qui, conjointement avec la bobine (60), constituent une partie de circuit (76) formant un oscillateur auquel sont connectés les éléments de circuit (78 et 80) faisant fonction de démodulateur et d'oscillateur.

5. Agencement selon la revendication 4, caractérisé en ce que le montage comparateur (80) se compose essentiellement de deux comparateurs (82a, b) montés en série, où la sortie du premier comparateur (82a) faisant suite au circuit de démodulation (78) est connecté à l'entrée négative du second comparateur (82b).

6. Agencement selon la revendication 5, caractérisé en ce que les sorties (84a, 84b) du premier et du second comparateurs (82a, b) sont respectivement connectés à la borne de base du premier ou second transistors (86, 90), qui attaquent respectivement la borne de base d'un troisième ou quatrième transistors (88, 92).

7. Agencement selon la revendication 8, caractérisé en ce que les sorties (A', A) du troisième et du quatrième transistors (88, 92) sont mutuellement antivalentes.

8. Agencement selon la revendication 6 où 7, caractérisé en ce que la borne de base du transistor (72) faisant fonction de commutateur, de la partie de circuit (70) engendrant une certaine hystérésis de commutation, est connectée à la sortie (A') du troisième transistor (88).

9. Agencement selon l'une quelconque des revendications 1 à 8, caractérisé en ce que l'élément de commande (58) présente la forme d'un corps allongé, cylindrique de préférence, qui est relié à l'induit (20).

10. Agencement selon l'une quelconque des revendications 1 à 9, caractérisé en ce que la liaison ou l'accouplement de traction (24) comporte un organe solidaire de l'élément de valve (22) ou de l'induit magnétique (20) qui s'engage, avec un certain jeu, entre deux épaulements de l'induit (20) et de l'élément de valve (22).

11. Agencement selon la revendication 10, caractérisé en ce que l'organe de traction se présente sous la forme d'un disque (30) s'engageant dans la gorge (28) de l'élément de valve (22) qui est solidaire de l'induit (20) et en ce que la gorge (28) présente deux épaulements (29a, b) contre lesquels vient s'appliquer un disque d'entraînement ou de traction (30).

12. Agencement selon l'une quelconque des revendications 1 à 11, caractérisé en ce que l'élément de valve (22) constitue un étage d'entrée de commande de la valve (10) qui présente aussi une partie formant un étage principal.

13. Agencement selon la revendication 12, caractérisé en ce que la partie formant l'étage principal de la valve (10) est un piston (36) pouvant se déplacer alternativement entre une position ouverte et une position fermée, dont le corps présente une cavité (50) et qui est guidé entre ses positions fermée et ouverte et, dans sa position de fermeture ou d'ouverture interrompt ou établit une communication entre ladite source de fluide sous pression et un utilisateur relié à cette source, qui est percé d'une première ouverture (48) reliant la cavité (50) et la voie aboutissant à l'utilisateur, cette première ouverture pouvant être fermée ou ouverte au moyen de l'élément de valve (22) et qui est percé d'une seconde ouverture (52) qui fait communiquer la cavité (50) avec la source de fluide sous pression.

14. Agencement selon la revendication 13, caractérisé en ce que la face du piston (36) orientée vers le siège (40) présente une partie conique (42).

15. Agencement selon la revendication 13 ou 14, caractérisé en ce que l'extrémité de l'élément de valve (22) orientée vers la première ouverture (28) présente une forme essentiellement conique.
